# EUROPEAN PATENT SPECIFICATION

(11) **EP 3 193 310 B1**
(45) Date of publication and mention of the grant of the patent: **20.11.2019**
(21) Application number: 16305040.4
(22) Date of filing: 15.01.2016
(51) Int. Cl.: G07B 17/00, G01G 19/00

(54) **FRANKING MACHINE WITH INTEGRATED SCALE**
FRANKIERMASCHINE MIT INTEGRIERTER WAAGE
MACHINE À AFFRANCHIR AVEC BALANCE INTÉGRÉE

(43) Date of publication of application: 19.07.2017
(73) Proprietor: NEOPOST TECHNOLOGIES, 92220 Bagneux (FR)
(72) Inventor: Montigny, Patrice, 78640 Villiers Saint Frédéric (FR); Le Rigoleur, Yann, 92160 Antony (FR)
(74) Representative: David, Alain

(56) References cited:
- US-A- 4 787 046
- US-A- 5 001 648
- US-A- 5 710 706
- US-A- 6 098 057

## Description

The present invention relates to a franking and shipping system aimed at small businesses and adapted for weighing letters and occasionally parcels. More specifically it relates to a weighing scale integrated into a franking machine forming part of this system, in order to minimize the footprint and to allow the weighing of large items in a particular mode.

Postage and/or shipping rates depend on various parameters such as service level, delivery address, dimensions and weight. Carriers and Posts have defined rate tables associating the dimensions of parcels with the corresponding tariffs. Therefore it is necessary to measure the dimensions and weight of letters or parcels in order to apply the correct rate.

Several systems exist to acquire the dimensions of letters or parcel. The simplest one consists of a ruler to measure length, width and height. High accuracy is not necessary; typically +/- 5 mm is enough. Additionally, many items fall into categories of postal products defined by dimensional ranges (such as letters or large letters) and it is not necessary to measure them. One may also use standard envelopes or package boxes for which a flat rate is applicable. However it is often necessary to weigh the item, either because the category is also defined by a weight range or the rate depends on the weight for certain destinations.

A small business owner will typically send a few letters per day, and from time to time a large letter or parcel. He may be looking for a complete, yet compact, cost effective and user friendly solution. The machine discussed here is specifically aimed at such users.

### Prior art

Franking machines are conventionally connected to weighing scales in order to apply the correct rate automatically. Once a postal product has been chosen, the scale will send the weight of the item and trigger the selection and application of the rate by the machine. The scale can be operated in two modes. In a direct mode, only one item is weighed at a time. In a differential mode, a stack of items is placed on the scale and items are weighed one by one in sequence as they are removed from the top of the stack. The differential mode is notably described in US5001648 and has become an industry standard.

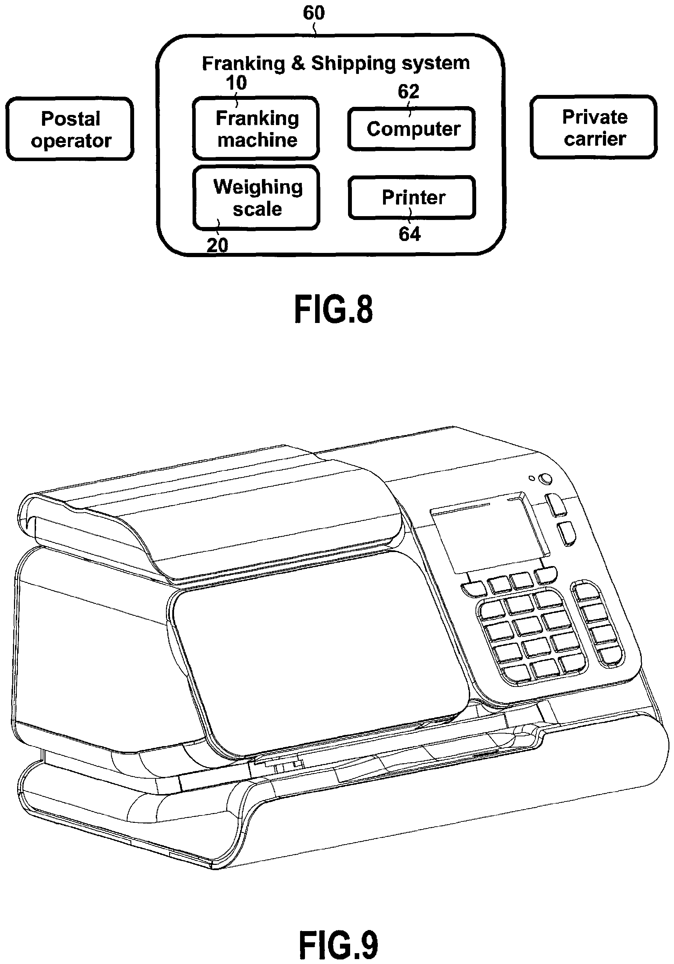

In order to minimize the footprint, the scale is often located on top of the franking machine and in some cases integrated into the housing. An example of such machine of the prior art is the IS-280 sold by Neopost company and illustrated in figure 9. The machine conventionally comprises a keyboard, a display, and a throat for receiving items to be franked.

Letters to be franked can be placed directly in the throat if no weighing is required (flat rate). Otherwise, a letter is placed first on the scale. The weight is measured and displayed on the screen for verification. The operator can then select to print the corresponding postage on a franking label, or alternatively place the letter into the throat. A sensor (not shown) detects when the label or letter is in a correct position and postage is printed directly thereon.

The franking machine can also be operated in a differential mode, where a stack of items is placed on the scale and items are weighed one by one in sequence as they are removed from the top of the stack. Postage can be printed either on a franking label or directly on the item when placed into the throat and detected by the franking machine.

The range of items that can be weighed on small machines is thus limited. A large or heavy item shall not be placed on the scale at the risk of damaging the machine, or may not sit stably on top. Holding the item while it is on the scale may affect the measurement of its weight. This weight may also exceed the capacity of a small scale designed primarily for letters. Therefore it is necessary to use a larger external scale for the weighing of heavy items.

US4787046 describes a mailing system, including a postal scale and a postage meter controlled by the postal scale, and having one step metering capabilities. The postage meter comprises a keyboard and a display, and is physically mounted on the postal scale and the weight of the meter forms part of the tare weight of the scale. In one embodiment a letter placed in the meter will automatically be weighed and metered in a single step. In another embodiment the system operates in a second mode wherein items placed on top of the meter are weighed and postage values are computed in accordance with the weight and other postal information entered by an operator. Postal labels for packages, envelopes too thick to be weighed in the meter, or other items may then be printed upon command by the operator.

Although the weighing scale of US4787046 is capable of weighing both the postage meter and large envelopes or small parcel which will not fit into the throat of the meter, it is still limited to the largest items that can sit stably on top without being hold by the operator. Furthermore, the keyboard and display are obscured and can't be used by the operator when a large item is placed on top of the meter.

US 6 098 057 A discloses a similar system.

### Object of the invention

It is an object of the present invention to solve the issues of the prior art by providing a franking and shipping system adapted for weighing letters and occasionally parcels, and notably a franking machine forming part of this system and having an integrated weighing scale that can be used for weighing all kinds of letters and parcels up to 70 lbs or 30 kg.

It is another object of the invention to provide a compact, cost effective and user friendly machine aimed at small businesses with minimal footprint and adapted for sending a few letters per day, and from time to time a large letter or parcel.

It is another object of the invention to provide a machine operable in various modes, including direct and differential weighing, without obscuring the keyboard and display of the machine.

It is another object of the invention to provide a machine capable of taking into account small weight variations like for instance the consumption of ink used for printing postage.

It is still another object of the invention to provide a franking and shipping system comprising a computer and a printer, further including the franking machine as previously cited.

### Summary of the invention

These objects are achieved by a system comprising a franking machine having a throat for receiving items to be franked, a platform where an item not fitting into said throat is placed, a weighing scale integrated at the bottom of the franking machine in order to minimise the footprint, at least a control unit for operating the franking machine, the franking machine and the weighing scale having separated power supply and data transmission modules, characterized in that the franking machine and the weighing scale are configured to be operated through the control unit of the franking machine and the weighing scale is configured to be decoupled from the franking machine to allow the weighing of large items such as parcels.

Preferred embodiments are defined by the dependent claims.

Like in US4787046, when the franking machine is coupled with the scale, the weight of the franking machine forms part of the tare weight of the scale.

The franking machine is operable in a direct mode where a letter placed in the machine will automatically be weighed and franked in a single step. The franking machine also includes a platform where a letter or small parcel not fitting into the throat of the machine can be placed to be weighed. Franking is delayed until the operator places a franking label into the throat.

The franking machine can also be operated in a differential mode, where a stack of items is placed on its top cover and items are weighed one by one in sequence as they are removed from the top of the stack. Postage can be printed either on a franking label or directly on the item if it is placed into the throat and detected by the franking machine.

The franking machine is operable in another mode, where it can be decoupled from the scale and put aside in order to allow the weighing of a large letter or parcel far exceeding the size of the platform.

Preferably, the franking machine and the weighing scale are configured to be operated independently through control units of both the franking machine and the weighing scale.

Advantageously, centring elements as provided for ensuring the correct positioning of the machine on the weighing scale during weighing operation. Said centring elements consist of a combination of feet of the franking machine and recesses made in a top of the weighing scale or of a skirt partially or completely extending around the weighing scale.

Preferably, the weighing scale includes openings allowing easy lifting and carrying of the franking machine and the weighing scale together.

The franking machine further comprises a locking mechanism allowing easy coupling and decoupling of the franking machine and the weighing scale. And said locking mechanism comprises lateral spring loaded buttons integrated at the bottom of the franking machine and having extensions configured for fitting with slots of the weighing scale.

Advantageously, the control unit is configured for weighing items one by one in sequence as they are removed from a stack of items placed on the platform.

Preferably, the control unit is configured for comparing the weight of an item placed into the throat with the last calculated weight of an item removed from the stack, and for sending a warning on a screen of the franking machine if a noticeable difference is detected.

The zeroing of the scale (acquisition of the tare weight) can be performed on request or at predetermined operation steps of the franking machine, to preclude deviations in weight measurement due for instance to temperature variations, or malfunction of the scale.

The franking machine and the scale form part of a franking and shipping system, which can further include a computer and a printer for conventional purposes, like selection of a carrier, induction of a parcel, accounting for postal charges and printing of shipping labels.

### Brief description of the drawings

The invention will be described and explained with additional specificity and detail through the use of the accompanying drawings in which:
Fig. 1 is a view of the franking machine of the invention with its integrated weighing scale,
Fig. 2 shows the franking machine decoupled from the scale for weighing large items,
Fig. 3 shows one example of centring elements ensuring the correct positioning of the machine on the scale,
Fig. 4 is a schematic view of a locking mechanism allowing easy coupling and decoupling of the franking machine and the weighing scale,
Fig. 5 is a flowchart showing a first mode of operation,
Fig. 6 is a flowchart showing a second mode of operation,
Fig. 7 is a flowchart showing a third mode of operation,
Fig. 8 is a general view of a franking and shipping system according to the invention, and
Fig. 9 is a view of a conventional franking machine with the weighing scale on top.

### Detailed description of exemplary embodiments

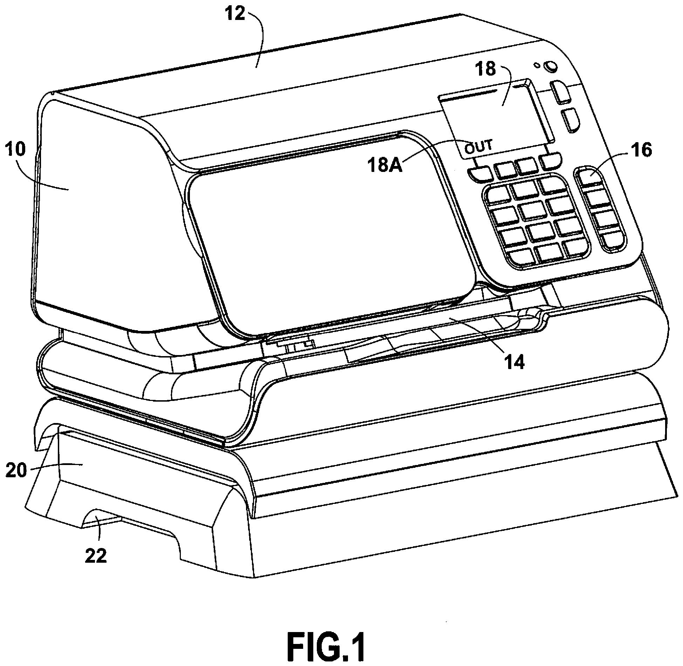

Figure 1 is a view of the franking machine of the invention 10 with its integrated weighing scale 20. Unlike the conventional machine of figure 9, the scale is not located on top but rather integrated at the bottom. The franking machine is operated in a manner similar to this conventional machine, except that the machine and the letters are weighed together. The housing at the top of the machine forms a platform 12 where a stack of items or a letter not fitting into a throat 14 of the machine can be laid down for weighing. The machine comprises a keyboard 16 and a screen 18, for selecting a postage rate, displaying the weight of an item, or when necessary sending a warning 18A. Openings 22 are located at the bottom of the scale to easily lift and displace the franking machine and the scale together.

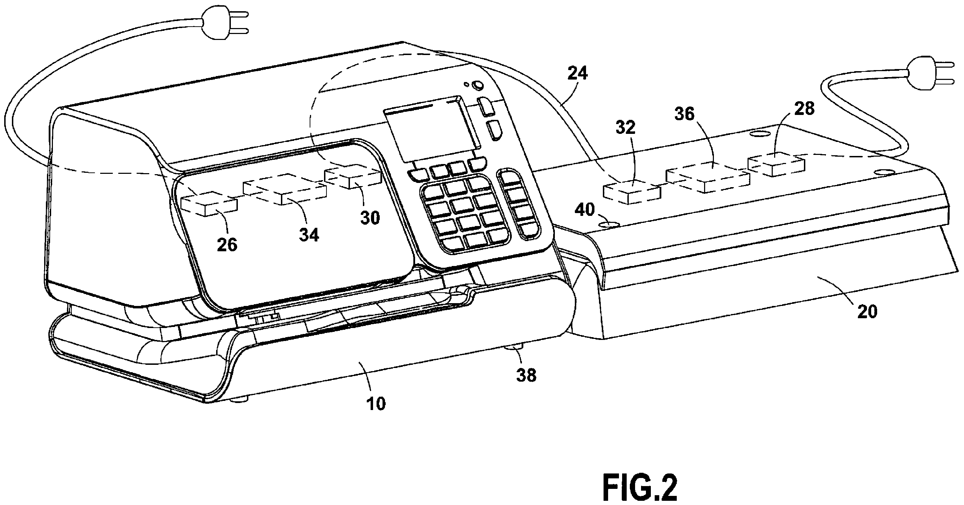

Figure 2 shows the franking machine 10 decoupled from the scale 20 for weighing a large item. Such large item can be placed on the scale and its weight transmitted to the franking machine, either via a data cable 24 or wirelessly. The franking machine and the scale have separated power supply modules 26, 28, and data transmission modules 30, 32 so that both can be operated through a control unit 34 of the franking machine or independently through control units 34, 36 of both the franking machine and the weighing scale.

The correct positioning of the machine on the scale during weighing operation is made by feet 38 located at the bottom of the franking machine 10 which fit into recesses 40 made in the top side of the scale.

It shall be noted that various modes of operation are possible in this configuration. For instance, it is still possible to frank letters without weighing (flat rate). The weighing scale can also be used in differential mode when a stack of large letters needs to be franked.

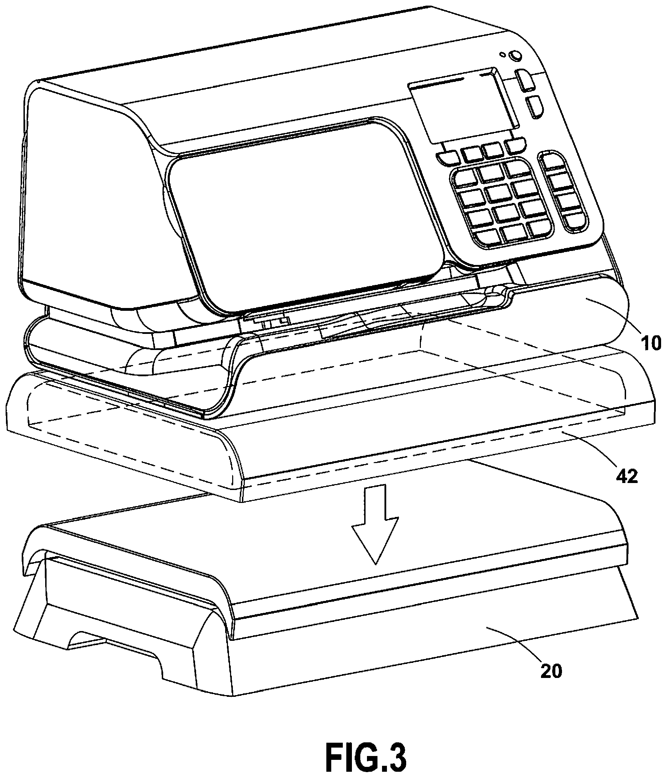

Figure 3 shows other centring elements ensuring correct positioning of the machine on the scale. For instance the franking machine may include a skirt 42 partially or completely extending around the top of the scale, and strong enough to support the machine when it is decoupled from the scale.

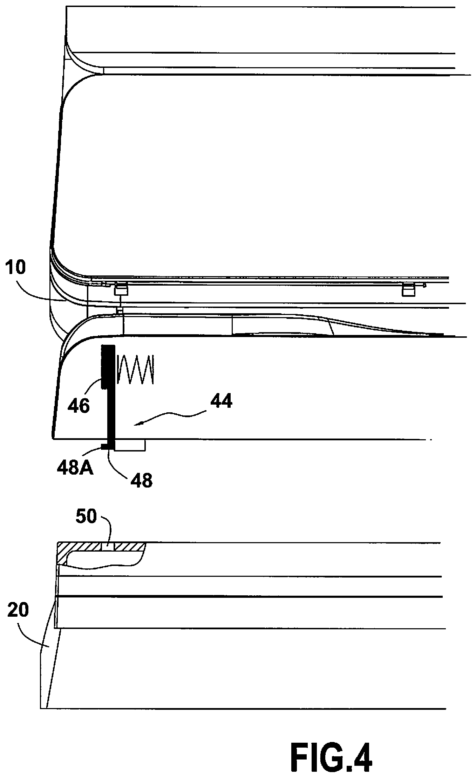

Figure 4 is a schematic view of a locking mechanism 44 allowing easy coupling and decoupling of the franking machine and the weighing scale. This mechanism consists of spring loaded buttons 46 integrated at the bottom and in the lateral sides of the franking machine. The buttons have extensions 48 protruding slightly from the bottom of the machine, and fitting into corresponding slots 50 made in the top side of the scale. This top side is thin enough to be hooked by the bottom end 48A of the extensions when the machine 10 and the scale 20 are coupled together. The slots are wide enough for the extensions to be released when the buttons are pressed. To decouple the franking machine from the scale, the operator presses the buttons and lifts the machine. The extensions are short enough for the machine to stand on its feet 38 when it is decoupled from the scale. Alternatively, the operator can lift the machine and the scale together, thanks to the openings 22, without pressing the buttons 46. This provides an additional security when the machine and the scale need to be carried together.

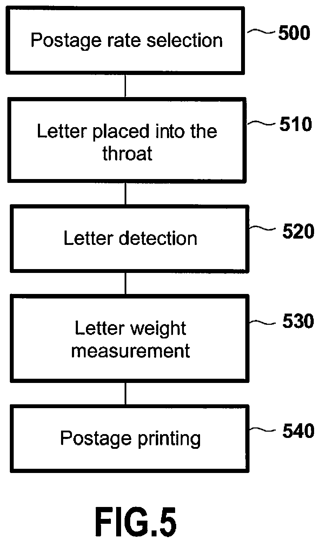

The operation of the franking machine of the invention is now illustrated with figures 5 to 7 corresponding to three distinct modes of operation of the weighing scale.

Figure 5 is a flowchart showing a first mode of operation (direct mode) for weighing standard letters. At step 500, a postage rate is selected. At step 510, the operator places a letter into the throat. At step 520, the letter is detected in a correct position. At step 530; the weight of the letter is measured, and at step 540, postage is printed directly thereon.

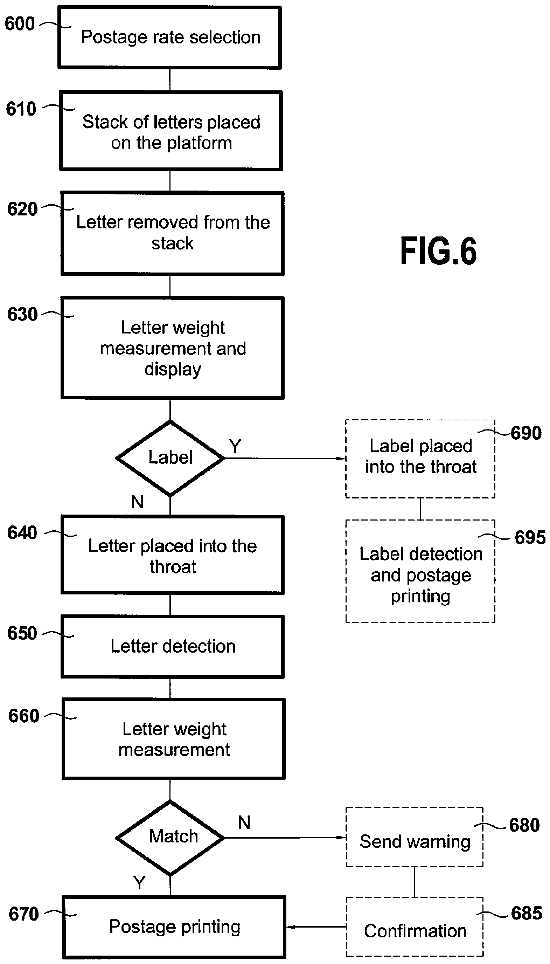

Figure 6 is a flowchart showing a second mode of operation (differential mode) for weighing standard letters. At step 600, a postage rate is selected. At step 610, a stack of letters is placed on the platform. At step 620, a letter is removed from the top of the stack and its weight is calculated (by difference) and displayed on the screen (step 630). At step 640, the operator places the letter into the throat. At step 650 the letter is detected in a correct position. At step 660, the weight of the letter is measured again, and at step 670, postage is printed thereon.

In this mode, the franking machine compares the measured weight with the last calculated weight and may send a warning (step 680) if a noticeable difference (more than one gram) is detected. Then the machine may wait for a confirmation (step 685) from the operator before printing postage.

Alternatively at step 630, the operator may want to print postage on a franking label instead of the letter. As the weight of a label is small (typically less than five grams), the machine may ignore it, keep displaying the last calculated weight and print postage accordingly. Otherwise the machine may wait for operator's confirmation before printing postage. More particularly, at step 690, the operator places the label into the throat and at step 695 the label is detected and the postage printed.

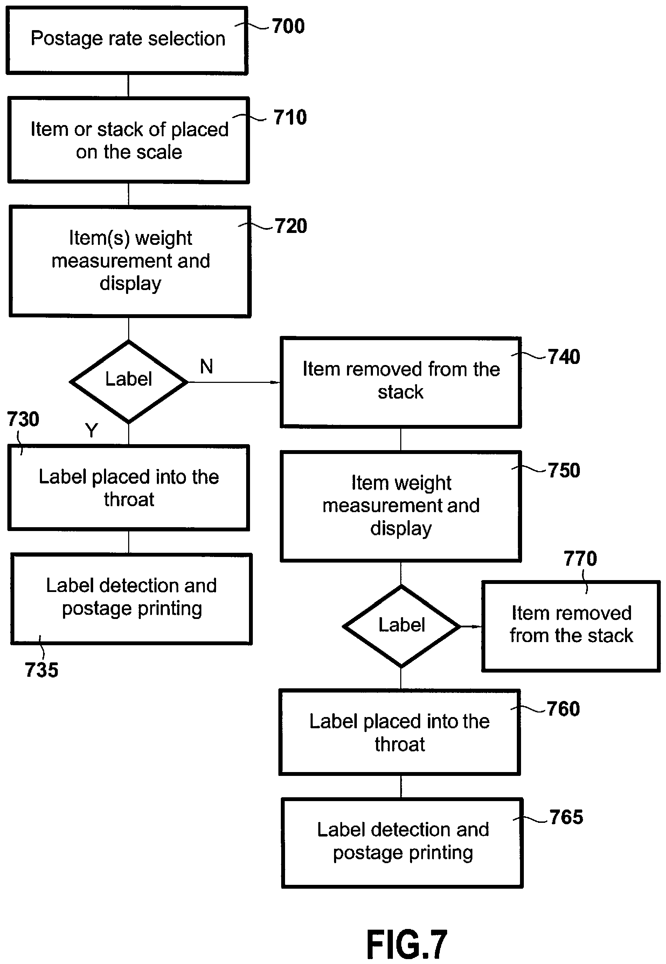

Figure 7 is a flowchart showing a third mode of operation for weighing large items such as parcels, with the franking machine decoupled from the scale. At step 700, a postage rate is selected. At step 710, a large item, or a stack of items, is placed on the scale. At step 720, the weight is measured and displayed on the screen. At step 730, the operator places a franking label into the throat to print postage thereon (step 735) or alternatively removes an item from the stack (step 740). In this case, the weight of the item is calculated (by difference) and displayed on the screen (step 750). Then the operator places a franking label into the throat (step 760) to print postage thereon (step 765) or removes another item (step 770), and so on.

In this mode, the operator can place the item that has just been weighed into the throat of the franking machine instead of a franking label. The detection of an item into the throat with result in printing the postage corresponding to the last calculated weight and the postal rate selected by the operator. As the franking machine is decoupled from the scale, there is no change in the measured weight, and thus neither recalculation nor comparison.

It shall be noted that only the last weight difference is taken into account for calculating postage. Indeed, the operator may always decide not to frank an item if the weight exceeds a given threshold and/or is not appropriate for the selected postage rate. In this manner, there is also no need to perform a zeroing of the scale (acquisition of the tare weight) after each item.

The zeroing of the scale can however be performed on request from the keyboard, or at predefined operation steps of the franking machine, to preclude deviations in weight measurement due for instance to temperature variations, or malfunction of the scale.

Notably if a stack of letters is left on the scale, there can be an offset of the measured weight after a certain time and the first letter to be removed might not be properly weighed.

Preferably a zeroing will be performed at each power-on of the machine, before any item is placed on the platform or on the scale. Additionally, the operator may request a zeroing from the keyboard if the machine has not been used for several hours.

Normally it is not necessary to take into account the weight of the ink dispensed to print postage because it is very small, typically in the range of nano- or micrograms. Adversely, replacing an empty cartridge by a full one adds several dozens of grams to the weight of the machine and it is recommended to take it into account by zeroing the scale.

A zeroing may also be performed for maintenance purposes after removing the print cartridge. In this case the machine is back to its original (out-of-factory) state and its weight expected to be within a precise range. A potential malfunction of the scale, signalled by a significant deviation of this weight, may thus be detected.

The franking machine of the invention is advantageously incorporated in a franking and shipping system 60 as illustrated in figure 8. The system includes the franking machine 10 and the weighing scale 20 as described herein, and further includes a computer 62 and a printer 64 for conventional purposes, like selection of a carrier, induction of a parcel, accounting for postal charges and printing of shipping labels. The franking machine and the scale are connected to the computer via data cables or wirelessly. The power supply of the scale is separated from the franking machine so that both can be operated independently. In particular, the scale can report directly to the computer when using a private carrier and not a postal operator.

## Claims

1. A system comprising a franking machine (10) having a throat (14) for receiving items to be franked, a platform (12) where an item not fitting into said throat is placed, a weighing scale (20) integrated at a bottom of the franking machine in order to minimise the footprint, at least a control unit (34, 36) for operating the franking machine, the franking machine and the weighing scale having separated power supply (26, 28) and data transmission modules (30, 32), **characterized in that** the franking machine and the weighing scale are configured to be operated through the control unit (34) of the franking machine, and the weighing scale is configured to be decoupled from the machine to allow the weighing of large items such as parcels.

2. The system according to claim 1, wherein the franking machine and the weighing scale are configured to be operated independently through control units (34, 36) of both the franking machine and the weighing scale.

3. The system according to claim 1 or 2, further comprising centring elements (38, 40; 42) ensuring the correct positioning of the machine on the weighing scale during weighing operation.

4. The system according to claim 3, wherein said centring elements consist of a combination of feet (38) of the franking machine and recesses (40) made in a top of the weighing scale.

5. The system according to claim 3, wherein said centring elements consist of a skirt (42) partially or completely extending around the weighing scale.

6. The system according to claim 1, wherein the weighing scale includes openings (22) allowing easy lifting and carrying of the franking machine and the weighing scale together.

7. The system according to claim 1, further comprising a locking mechanism (44) allowing easy coupling and decoupling of the franking machine and the weighing scale.

8. The system according to claim 7, wherein said locking mechanism comprises lateral spring loaded buttons (46) integrated at the bottom of the franking machine and having extensions (48) configured for fitting with slots (50) of the weighing scale.

9. The system according to claims 1 to 10, wherein the control unit (34) is configured for weighing items one by one in sequence as they are removed from a stack of items placed on the platform.

10. The system according to claim 9, wherein the control unit (34) is configured for comparing the weight of an item placed into the throat with the last calculated weight of an item removed from the stack, and for sending a warning (18A) on a screen (18) of the franking machine if a noticeable difference is detected.

11. The system according to claims 1 to 10, wherein the control unit (34) is configured for performing the zeroing of the scale on request from the keyboard, or at predefined operation steps of the franking machine.

12. Franking and shipping system (60) comprising a computer (62) and a printer (64), further including the system of claims 1 to 11.

## Patentansprüche

1. System, umfassend eine Frankiermaschine (10) mit einem Durchlass (14) zur Aufnahme von Gegenständen, die frankiert werden sollen, eine Ablage (12), auf welcher ein Gegenstand platziert wird, der nicht in den Durchlass passt, eine Waage (20), die an einem Boden der Frankiermaschine integriert ist, um den Platzbedarf zu minimieren, zumindest eine Steuereinheit (34, 36) zum Betreiben der Frankiermaschine, wobei die Frankiermaschine und die Waage separate Stromversorgungs- (26, 28) und Datenübertragungsmodule (30, 32) aufweisen, **dadurch gekennzeichnet, dass** die Frankiermaschine und die Waage dazu ausgestaltet sind, durch die Steuereinheit (34) der Frankiermaschine betrieben zu werden, und die Waage dazu ausgestaltet ist, von der Maschine entkoppelt zu werden, um das Wiegen von großen Gegenständen wie etwa Paketen zu erlauben.

2. System nach Anspruch 1, wobei die Frankiermaschine und die Waage dazu ausgestaltet sind, unabhängig durch Steuereinheiten (34, 36) sowohl der Frankiermaschine als auch der Waage betrieben zu werden.

3. System nach Anspruch 1 oder 2, ferner umfassend Zentrierelemente (38, 40; 42), welche die korrekte Positionierung der Maschine auf der Waage während eines Wiegevorgangs sicherstellen.

4. System nach Anspruch 3, wobei die Zentrierelemente aus einer Kombination von Füßen (38) der Frankiermaschine und Ausnehmungen (40) bestehen, die in einer Oberseite der Waage ausgebildet sind.

5. System nach Anspruch 3, wobei die Zentrierelemente aus einer Schürze (42) bestehen, die sich zum Teil oder vollständig um die Waage herum erstreckt.

6. System nach Anspruch 1, wobei die Waage Öffnungen (22) beinhaltet, die das einfache Aufheben und Tragen der Frankiermaschine zusammen mit der Waage erlauben.

7. System nach Anspruch 1, ferner umfassend einen Verriegelungsmechanismus (44), der das einfache Koppeln und Entkoppeln der Frankiermaschine und der Waage erlaubt.

8. System nach Anspruch 7, wobei der Verriegelungsmechanismus seitliche federbelastete Knöpfe (46) umfasst, die an dem Boden der Frankiermaschine integriert sind und Verlängerungen (48) aufweisen, die dazu ausgestaltet sind, mit Schlitzen (50) der Waage zusammenzupassen.

9. System nach den Ansprüchen 1 bis 10, wobei die Steuereinheit (34) dazu ausgestaltet ist, Gegenstände der Reihe nach einzeln zu wiegen, während sie von einem Stapel von Gegenständen, der auf der Plattform platziert ist, entfernt werden.

10. System nach Anspruch 9, wobei die Steuereinheit (34) dazu ausgestaltet ist, das Gewicht eines Gegenstands, der in den Durchlass platziert wird, mit dem zuletzt berechneten Gewicht eines Gegenstands, der von dem Stapel entfernt wurde, zu vergleichen, und eine Warnung (18A) an einen Bildschirm (18) der Frankiermaschine zu senden, wenn ein wahrnehmbarer Unterschied erfasst wird.

11. System nach den Ansprüchen 1 bis 10, wobei die Steuereinheit (34) dazu ausgestaltet ist, die Nullung der Waage auf Anforderung durch die Tastatur durchzuführen, oder bei vordefinierten Betriebsschritten der Frankiermaschine.

12. Frankier- und Versandsystem (60), das einen Computer (62) und einen Drucker (64) umfasst und ferner das System nach den Ansprüchen 1 bis 11 beinhaltet.

## Revendications

1. Un système comprenant une machine à affranchir (10) ayant une gorge (14) destinée à recevoir des articles à affranchir, une plate-forme (12) dans laquelle est placé un article ne s'insérant pas dans ladite gorge, une balance (20) intégrée au bas de la machine à affranchir afin de minimiser l'encombrement, au moins une unité de commande (34, 36) pour faire fonctionner la machine à affranchir, la machine à affranchir et la balance ayant des alimentations de puissance (26, 28) et des modules de transmission (30, 32) séparés, **caractérisé en ce que** la machine à affranchir et la balance sont configurées pour fonctionner au travers de l'unité de commande (34) de la machine à affranchir, et la balance est configurée pour être découplée de la machine afin de permettre la pesée de gros articles tels que des colis.

2. Système selon la revendication 1, dans lequel la machine à affranchir et la balance sont configurées pour fonctionner indépendamment au travers des unités de commande (34, 36) à la fois de la machine à affranchir et de la balance.

3. Système selon la revendication 1 ou 2, comprenant en outre des éléments de centrage (38, 40; 42) assurant le positionnement correct de la machine sur la balance pendant le pesage.

4. Système selon la revendication 3, dans lequel lesdits éléments de centrage sont constitués d'une combinaison de pieds (38) de la machine à affranchir et d'évidements (40) réalisés dans la partie supérieure de la balance.

5. Système selon la revendication 3, dans lequel lesdits éléments de centrage sont constitués d'une jupe (42) s'étendant partiellement ou complètement autour de la balance.

6. Système selon la revendication 1, dans lequel la balance comprend des ouvertures (22) permettant de soulever et de transporter facilement ensemble la machine à affranchir et la balance.

7. Système selon la revendication 1, comprenant en outre un mécanisme de verrouillage (44) permettant des couplage et découplage faciles de la machine à affranchir et de la balance.

8. Système selon la revendication 7, dans lequel ledit mécanisme de verrouillage comprend des boutons à ressort latéraux (46) intégrés dans le socle de la machine à affranchir et ayant des extensions (48) configurées pour s'adapter aux fentes (50) de la balance.

9. Système selon les revendications 1 à 10, dans lequel l'unité de commande (34) est configurée pour peser des articles un par un séquentiellement lorsqu'ils sont retirés d'une pile d'articles placés sur la plate-forme.

10. Système selon la revendication 9, dans lequel l'unité de commande (34) est configurée pour comparer le poids d'un article placé dans la gorge au dernier poids calculé d'un article retiré de la pile, et pour envoyer un avertissement (18A) sur un écran (18) de la machine à affranchir si une différence notable est détectée.

11. Système selon les revendications 1 à 10, dans lequel l'unité de commande (34) est configurée pour effectuer la remise à zéro de la balance à la demande du clavier ou à des étapes de fonctionnement prédéfinies de la machine à affranchir.

12. Système d'affranchissement et d'expédition (60) comprenant un ordinateur (62) et une imprimante (64), comprenant en outre le système des revendications 1 à 11.
